# EUROPÄISCHE PATENTSCHRIFT

(11) **EP 2 008 012 B1**
(45) Veröffentlichungstag und Bekanntmachung des Hinweises auf die Patenterteilung: **23.09.2009**
(21) Anmeldenummer: 07728088.1
(22) Anmeldetag: 13.04.2007
(51) Int. Cl.: F16L 37/092, F16L 33/22

(54) **STECKVERBINDER FÜR INSBESONDERE AUS KUNSTSTOFF BESTEHENDE ROHRLEITUNGEN**
PLUG CONNECTOR FOR ESPECIALLY PLASTIC PIPE CONDUITS
RACCORD À EMBOÎTEMENT POUR CONDUITES EN PARTICULIER EN MATIÈRE PLASTIQUE

(30) Priorität: 18.04.2006 DE 202006006304 U
(43) Veröffentlichungstag der Anmeldung: 31.12.2008
(73) Patentinhaber: Voss Automotive GmbH, 51688 Wipperfürth (DE)
(72) Erfinder: LECHNER, Martin, 51789 Lindlar (DE); TERLAU, Norbert, 51515 Kürten (DE)
(74) Vertreter: Patentanwälte Dr. Solf & Zapf
(86) Internationale Anmeldenummer: PCT/EP2007/053623
(87) Internationale Veröffentlichungsnummer: WO 2007/118855

(56) Entgegenhaltungen:
- EP-A1- 1 398 559
- DE-A1- 10 261 595
- DE-U1- 20 214 847
- DE-U1- 20 319 959
- DE-U1- 29 807 763

## Beschreibung

Die vorliegende Erfindung betrifft einen Steckverbinder gemäß dem Oberbegriff des Anspruchs 1.

Im Zusammenhang mit solchen Steckverbindern sind beispielsweise die DE 10261595 A1, die EP 0 753 698 B1, die EP 0 733 844 B1 und die DE 203 19 959 U1 als Stand der Technik von Bedeutung, in denen verschiedene Anwendungen und konstruktive Ausführungen von derartigen oder ähnlichen bekannten Anschlussvorrichtungen beschrieben werden.

Die EP 0 733 844 B1 beschreibt dabei eine Anschlussvorrichtung zum schnellen und lösbaren Anschluss mindestens einer Kunststoff-Rohrleitung, bestehend aus einem Gehäuseteil mit mindestens einer Aufnahmeöffnung zum Einstecken der Rohrleitung sowie aus einem in der Aufnahmeöffnung angeordneten Klemmring, der zum Arretieren der Rohrleitung über einen Außenkonus mit einem Innenkonus des Gehäuseteils zusammenwirkt, wobei das Gehäuseteil zwecks Lösbarkeit der Rohrleitung zweiteilig aus einem Basisteil und einem lösbar mit diesem verbundenen, den Innenkonus aufweisenden Einsatzteil besteht und das Einsatzteil über eine schnappbare Formschlussverbindung mit dem Basisteil verbunden ist. Hierbei ist vorgesehen, dass das Einsatzteil eine innere, umlaufende Dichtlippe zur dichtenden Anlage auf der Außenumfangsfläche der Rohrleitung aufweist, wobei die Dichtlippe sich vor dem Einstecken der Rohrleitung derart in Einsteckrichtung schräg nach innen erstreckt, dass sie durch die eingesteckte Rohrleitung etwas elastisch aufgeweitet wird und dann dichtend anliegt.

Die EP 0 753 698 B1 beschreibt eine Steckverbindung zum Anschluss von Druckmittelleitungen, bestehend aus einem Gehäuseteil mit einer eine einseitige Öffnung aufweisenden Aufnahme zum Einstecken eines insbesondere von einem Rohrleitungsende gebildeten Steckabschnittes, wobei innerhalb der Aufnahme auf der der Öffnung zugekehrten Seite mindestens ein Halteelement und von dem Halteelement ausgehend in Richtung von der Öffnung weg mindestens ein Dichtungselement angeordnet ist, und beim Einsteckvorgang des Steckabschnittes in die Aufnahme des Gehäuseteils zuerst eine Haltefunktion und im weiteren Verkauf des Einsteckvorganges zusätzlich über das Dichtungselement eine Abdichtung des Steckabschnittes gegenüber dem Gehäuseteil gewährleistet ist, wobei das Gehäuseteil einen Leckagepfad derart aufweist, dass in einer durch das Halteelement arretierten, jedoch noch nicht über das Dichtungselement abgedichteten Einsteckstellung des Steckabschnittes eine definiert begrenzte, wahrnehmbare Undichtigkeit gewährleistet ist. Hierbei ist vorgesehen, dass dem Leckagepfad ein Ventilelement derart zugeordnet ist, dass in der noch nicht über das Dichtungselement abgedichteten Einsteckstellung des Steckabschnittes einerseits das Druckmittel über den Leckagepfad nach außen treten kann, andererseits aber ein Eindringen von Schmutzpartikeln und dergleichen von außen in das Gehäuseinnere ausgeschlossen ist.

Die DE 203 19 959 U1 beschreibt einen Steckverbinder für Medienleitungen, bestehend aus einem Gehäuseteil mit einer Steckaufnahme zum mediendichten Einstecken eines rohrstückförmigen Einsteckteils, wobei in der Steckaufnahme ein Halteelement zum Arretieren sowie eine Mediendichtung zum Abdichten des eingesteckten Einsteckteils angeordnet sind, und wobei das Gehäuseteil zweiteilig aus einem Basisteil und einem mit diesem über eine schnappbare Formschlussverbindung verbundenen Einsatzteil besteht. Hierbei ist vorgesehen, dass das Basisteil seinerseits ebenfalls zweiteilig aus einem Aufnahmeteil für das Halteelement, die Mediendichtung und das Einsatzteil sowie aus einem Anschlussteil zur Anschlussverbindung des Gehäuseteils an eine Medienleitung besteht.

Gleichzeitig wird in der DE 203 19 959 U1 auch ein Steckverbinder für Medienleitungen beansprucht, der die vorstehenden Merkmale aufweisen kann, bestehend aus einem Gehäuseteil mit einer Steckaufnahme zum mediendichten Einstecken eines rohrstückförmigen Einsteckteils, wobei innerhalb der Steckaufnahme ausgehend von einer mündungsseitigen Schmutzdichtung in Einsteckrichtung gesehen zunächst ein Halteelement zum Arretieren des eingesteckten Einsteckteils und daran anschließend eine Mediendichtung angeordnet sind, wobei ein Leckagepfad derart gebildet ist, dass in einer durch das Halteelement arretierten, aber noch nicht über die Mediendichtung abgedichteten Vorarretierstellung des Einsteckteils eine definiert begrenzte, physisch wahrnehmbare Undichtigkeit gewährleistet ist. Hierbei ist vorgesehen, dass der Leckagepfad durch auf dem Außenumfang des Einsteckteils angeordnete Vertiefungen gebildet ist, die in der Vorarretierstellung einerseits im Bereich der Mediendichtung und andererseits im Bereich der Schmutzdichtung angeordnet sind.

Bei heute eingesetzten, einteiligen, Stutzen ähnlicher Art (EP 0 753 698 B1, EP 0 733 844 B1) werden üblicherweise Aufnahmeteile mit Halteelement und Dichtring in einen Metall-Einschraubstutzen eingesetzt. Der Nachteil bei diesen Steckverbindungen ist dabei, dass der Anteil an Metall sehr groß ist und daher auch die Kosten für Material und Bearbeitung entsprechend hoch sind.

Es werden daher auch zweiteilige Ausführungen mit reduziertem Metall-Anteil eingesetzt. Bei diesen, zweiteiligen, Steckverbindungen werden üblicherweise vormontierte Kunststoff-Aufnahmeteile mit Halteelement und Dichtring an Einschraubteilen befestigt, wie dies der DE 203 19 959 U1 zu entnehmen ist. Diese bekannten Steckverbindungen folgen dabei dem Grundprinzip: "Halten vor Dichten". Der Nachteil dieser Steckverbinder ist, dass außer dem Haupt-Dichtring, der das Rohr gegen das Aufnahmeteil abdichtet, ein weiterer Dichtring das Aufnahmeteil gegen das Einschraubteil dichten muss. Das verursacht einerseits hohe Kosten, und andererseits entsteht eine Stelle, an der Undichtigkeiten auftreten können.

Der vorliegenden Erfindung liegt die Aufgabe zugrunde, einen mehrteiligen Steckverbinder der gattungsgemäßen Art zu schaffen, der bei hoher Funktionssicherheit eine vereinfachte Montagefähigkeit aufweist.

Als gattungsgemäß wird dabei ein Steckverbinder angesehen, wie er in der DE 203 19 959 U1, insbesondere in der in Fig. 6 dargestellten Ausführungsform, beschrieben ist.

Erfindungsgemäß wird dies durch die Merkmale des kennzeichnenden Teiles des Anspruchs 1 erreicht.

Dadurch, dass die Mediendichtung zum Abdichten des eingesteckten Einsteckteils zwischen dem Anschlussteil und dem rohrstückförmigen Einsteckteil angeordnet ist, wird vorteilhafterweise erreicht, dass außer dem durch die Mediendichtung gebildeten Haupt-Dichtring, der das Rohr gegen das Aufnahmeteil abdichtet, kein weiterer Dichtring das Aufnahmeteil gegen das Einschraubteil dichten muss. Dabei sind für den erfindungsgemäßen Steckverbinder verschiedene technische Detaillösungen möglich, denen allen gemeinsam ist, dass die Mediendichtung, insbesondere ein Dichtring, auf der Rohr-Anschlußseite, die einzige Schnittstelle zum druckbeaufschlagten Raum innerhalb der Steckverbindung ist.

Weitere vorteilhafte Ausgestaltungsmerkmale der Erfindung sind in den Unteransprüchen sowie der folgenden Beschreibung enthalten.

Anhand mehrerer bevorzugter Ausführungsbeispiele soll im Folgenden die Erfindung näher erläutert werden. Dabei zeigen:
- Fig. 1: eine perspektivische Gesamtansicht eines erfindungsgemäßen Steckverbinders,
- Fig. 2: einen Längsschnitt durch den in Fig. 1 dargestellten erfindungsgemäßen Steckverbinder,
- Fig. 3: einen weiteren Längsschnitt durch den in Fig. 1 dargestellten erfindungsgemäßen Steckverbinder, entlang der Linie III-III in Fig. 2,
- Fig. 4: einen Längsschnitt durch ein dem erfindungsgemäßen Steckverbinder zugeordnetes Bauteil,
- Fig. 5: einen Querschnitt durch das in Fig. 4 dargestellte Bauteil, entlang der Linie V-V in Fig. 4,
- Fig. 6: einen Längsschnitt durch ein weiteres dem erfindungsgemäßen Steckverbinder zugeordnetes Bauteil,
- Fig. 7: eine Darstellung eines Längsschnitts einer weiteren Ausführung eines erfindungsgemäßen Steckverbinders,
- Fig. 8: einen weiteren Längsschnitt durch den in Fig. 7 dargestellten erfindungsgemäßen Steckverbinder, entlang der Linie VIII-VIII in Fig. 7,
- Fig. 9: eine Ansicht analog zu Fig. 3 und 8 in einer Ausführungsvariante,
- Fig. 10: einen Steckverbinder, der nicht in den Rahmen der Erfindung fällt
- Fig. 11: einen Längsschnit einer weiteren Ausführungsform eines erfindungsgemäßen Steckverbinders
- Fig. 12: einen Querschnitt durch eine weitere Ausführungsform der Erfindung,
- Fig. 13: eine vergrößerte Darstellung der in Fig. 12 mit B bezeichneten Einzelheit,
- Fig. 14: die Darstellung einer halbgeschnittenen weiteren Ausführungsform der Erfindung,
- Fig. 15: das Anschlussteil der in Fig. 14 dargestellten Ausführung.

In den verschiedenen Figuren der Zeichnung sind gleiche Teile stets mit den gleichen Bezugszeichen versehen und werden daher im Folgenden in der Regel jeweils nur einmal beschrieben.

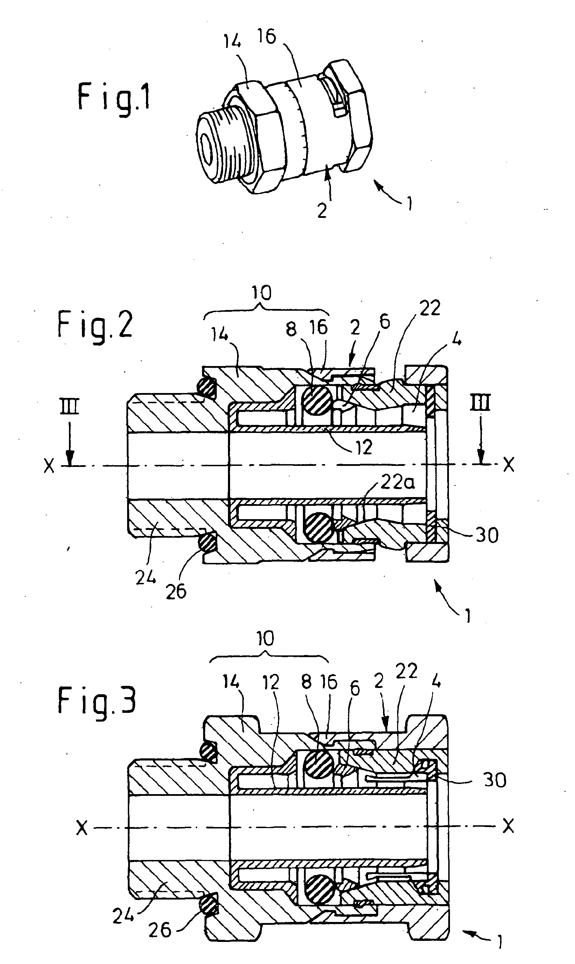

Wie sich zunächst aus Fig. 1 bis 3 ergibt, besteht ein erfindungsgemäßer Steckverbinder 1 für insbesondere aus Kunststoff bestehende Rohrleitungen aus einem Gehäuseteil 2 mit einer Steckaufnahme 4 zum mediendichten Einstecken eines rohrstückförmigen (nicht dargestellten) insbesondere aus Kunststoff, wie Polyamid, bestehenden Einsteckteils, wie eines Rohrendes, wobei in der Steckaufnahme 4 ein Halteelement 6 zum Arretieren sowie eine Mediendichtung 8 zum Abdichten des eingesteckten Einsteckteils angeordnet sind. Dabei weist das Gehäuseteil 2 ein Basisteil 10 auf, welches zweiteilig aus einem Aufnahmeteil 16 für das Halteelement 6 sowie aus einem, insbesondere als Einschraubstutzen ausgebildeten, Anschlussteil 14 zur Anschlussverbindung des Gehäuseteils 2 an eine Gewindebohrung eines nicht dargestellten, beliebigen Aggregates besteht. Innerhalb des Gehäuseteils 2 ist vorzugsweise eine Stützhülse 12 zum stützenden Eingriff in das einzusteckende Einsteckteil angeordnet.

Die Mediendichtung ist 8 zum Abdichten des in die Steckaufnahme 4 eingesteckten Einsteckteils radial zwischen dem Anschlussteil 14 und dem rohrstückförmigen Einsteckteil angeordnet. Dadurch erübrigt sich eine Druckdichtung im Bereich des Aufnahmeteils 16 sowie auch eine zusätzliche Dichtung zwischen Anschlussteil 14 und Aufnahmeteil 16.

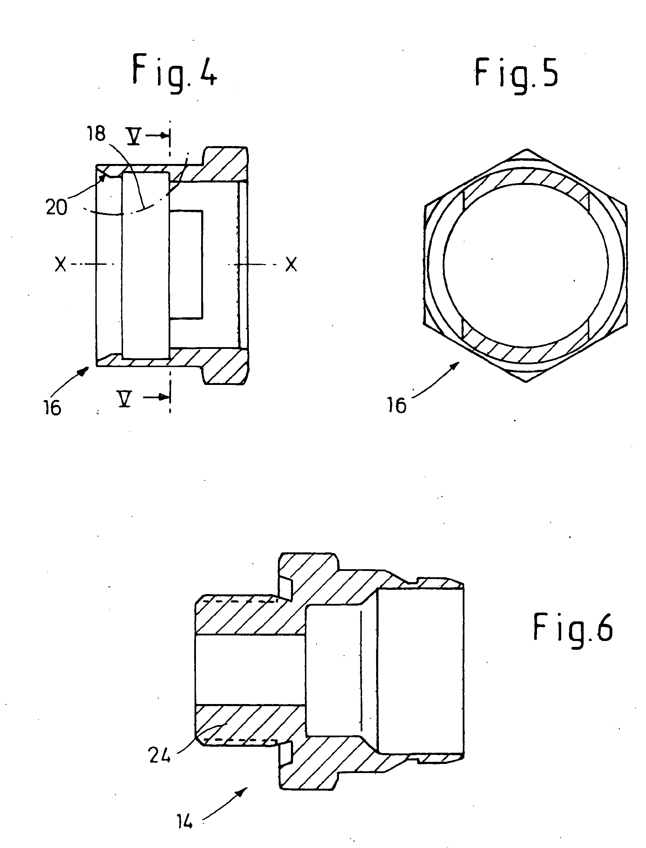

Fig. 1 bis 3 zeigen nun, dass das Aufnahmeteil 16 als ein das Anschlussteil 14 bereichsweise hülsenartig umgebendes Manschettenteil ausgebildet ist, das vorzugsweise auf das Anschlussteil 14 aufclipsbar ist und aus Kunststoff besteht. Das Manschettenteil 16 ist in Fig. 4 und 5 als Einzelteil dargestellt. Ein mit dem Bezugszeichen 18 bezeichneter, in Fig. 4 durch einen Kreisbogen umschriebener Rastbereich des Manschettenteils 16 ist dabei derart elastisch, dass beim Aufclipsen keine Beschädigungen entstehen. Hierbei ist es auch möglich, das Manschettenteil im Rastbereich mit einer axialen (parallel zur Längsachse X-X ausgeführten) Schlitzung zu versehen.

Wie erwähnt, liegt im Einbauzustand die Mediendichtung 8, insbesondere ein O-Ring, in dem Anschlussteil 14, das insbesondere aus Messing bestehen kann und in einer Ausführung als Einschraubstutzen in Fig. 6 als Einzelteil dargestellt ist.

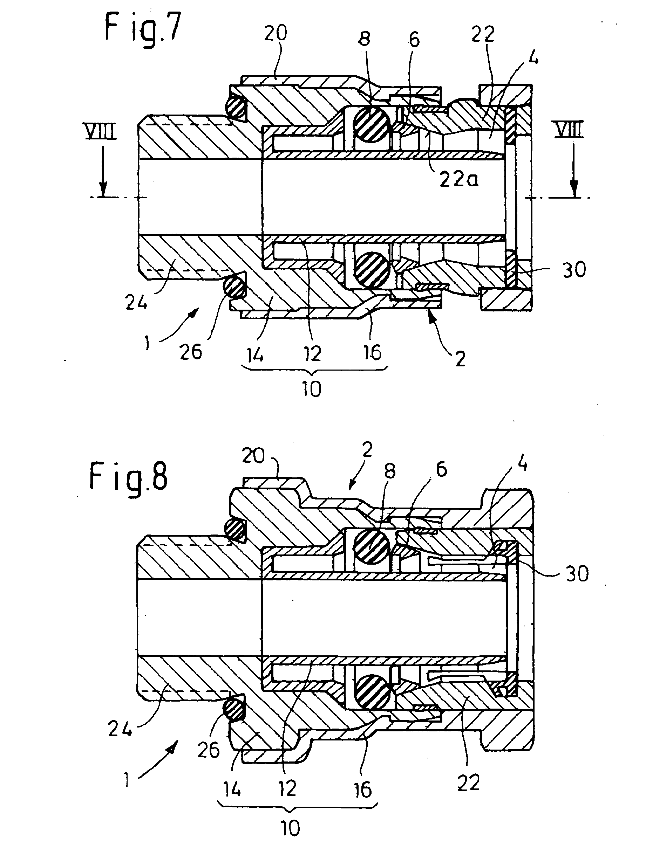

Wie Fig. 7 und 8 zeigen, kann das als Kunststoff-Aufnahmeteil ausgebildete Manschettenteil 16 eine polygonale, insbesondere sechskantige, Außenkontur des Anschlussteils 14 mit einem Muffenabschnitt 20 außenseitig umfassen und so eine Verdrehsicherung bilden. Insofern kann das Manschettenteil 16 als Bestandteil des Gehäuseteils 2 angesehen werden. Der Kunststoff kann dabei mit Vorteil insbesondere nur zwei Schlüsselflächen des Anschlussteils 14 umfassen, die Untermaß haben. Die Verdrehsicherung kann auch durch eine Rändelung an einem oder beiden der Bauteile 16 oder 14 erreicht werden, wenn der Bereich zwischen diesen Teilen als Presspassung ausgelegt ist. Auch durch einen Pressbereich ohne Rändelung kann dies erreicht werden. Ein bei einer Drehung zum Einstellen der Winkelpositionen auftretendes Reibmoment sollte vorteilhafterweise bevorzugt Werte von mehr als 10 Nm annehmen.

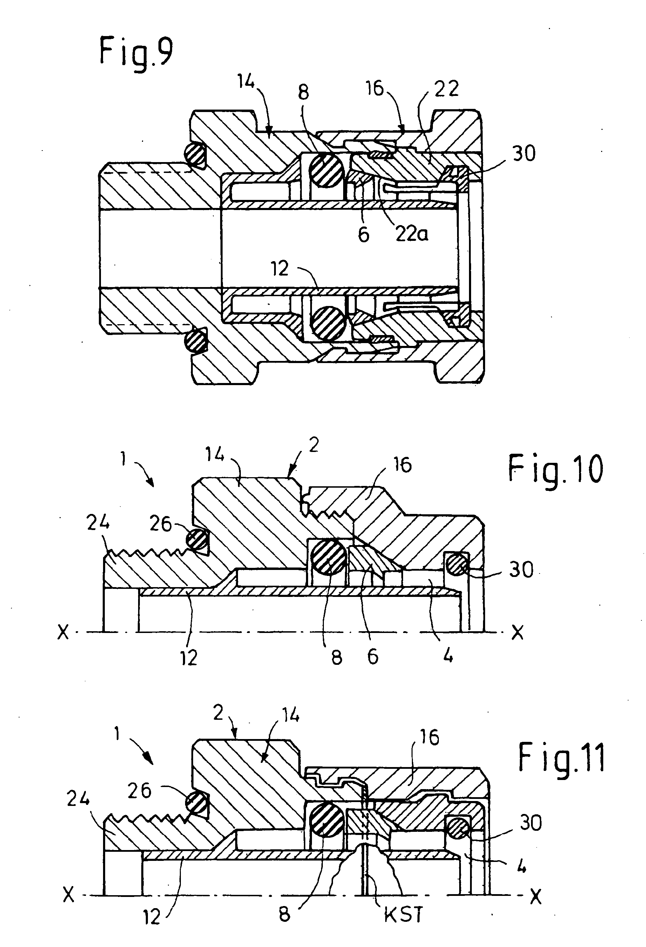

Das Manschettenteil 16 kann auch auf andere Art am Anschlussteil 14 befestigt sein, beispielsweise durch Aufschrauben. Es ist auch möglich, das Manschettenteil 16, welches das Anschlussteil 14 umgibt, als aufschraubbares, aus Kunststoff (KST) oder Messing (Ms) bestehendes Teil auszuführen, wie dies in Fig. 9 dargestellt ist, oder in anderer Weise aufzurasten, wie dies Fig. 10 zeigt. Entsprechend weicht dann auch die Gestaltung des Anschlussteils 14 von der in Fig. 6 gezeigten ab.

Wie in Fig. 9 veranschaulicht ist, ist es durch die Zweiteiligkeit des aus dem Anschlussteil 14 und dem Aufnahmeteil 16 bestehenden Basisteils 10 möglich, das Einsatzteil 22 "von innen her" einzusetzen, wobei eine formschlüssige Halterung erreicht wird. Es erübrigt sich daher auch eine Verrastung, so dass das Einsatzteil 22 als starres, relativ unelastisches Ringelement ausgebildet sein kann. Deshalb muss eine Schmutzdichtung 30 nicht in einem Mehrkomponenten-Spritzverfahren angeformt werden, sondern kann einfach als Dichtring in eine innere Ringnut des Einsatzteils 22 eingelegt werden.

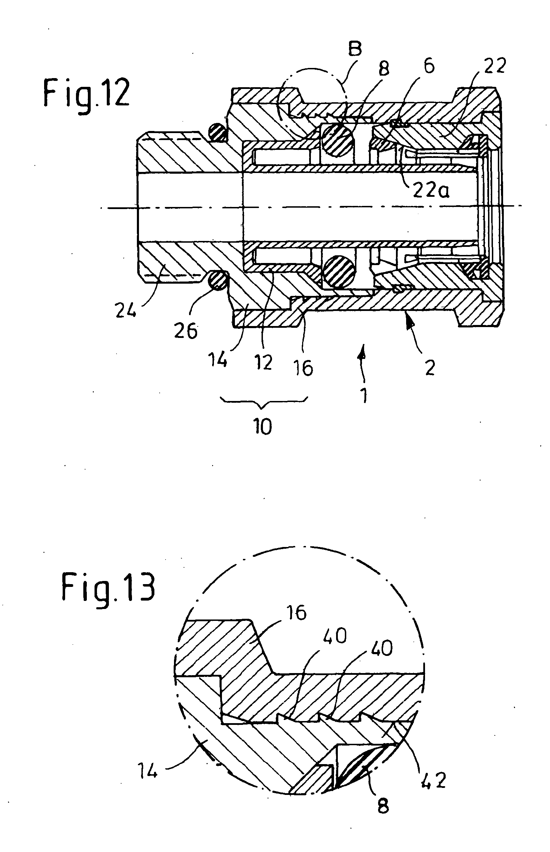

Die in Fig. 12 und 13 dargestellte weitere Ausführungsform der Erfindung weist eine große Ähnlichkeit zu der in Fig. 8 dargestellten Ausführung auf. Das Charakteristikum dieser Ausführung besteht - wie die in Fig. 13 gezeigte vergrößerte Darstellung zeigt - darin, dass zur Erhöhung der Festigkeit der Verbindung zwischen dem Anschlussteil 14 des Basisteils 10 des Gehäuses 2 und dem Aufnahmeteil 16 auf dem Umfang des Anschlussteils 14 Kraft-Formschluss-Elemente 40 angeordnet sind. Diese Elemente 40, die sich in die Innenwand 42 des Aufnahmeteils 16 einprägen, können eine verschiedenartige Gestalt haben, weisen aber in der dargestellten Ausführung vorteilhafterweise eine Sägezahnform auf, so dass das Anschlussteil für eine Verpressung mit dem Aufnahmeteil 16 nach der Art eines Einschlagdorns ausgebildet ist. Die Kraft-Formschluss-Elemente 40 können über den gesamten oder auch nur über einen Teil des Umfangs umlaufen bzw. verteilt sein.

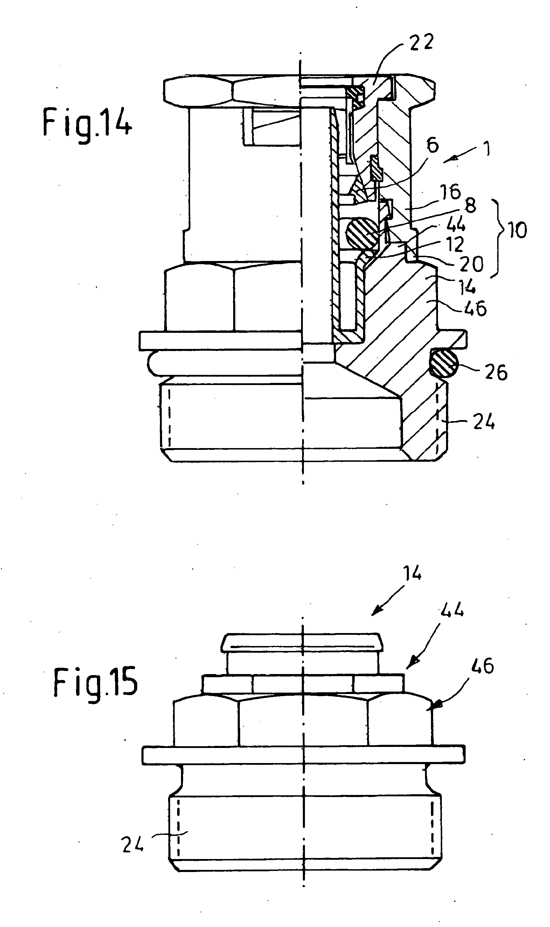

Bei der in Fig. 14 und 15 dargestellten Ausführungsform der Erfindung umfasst das Aufnahmeteil 16 außenseitig - wie auch in Fig. 7 und 8 gezeigt - formschlüssig eine polygonale, insbesondere sechskantige, Außenkontur des Anschlussteils 14 mit einem Muffenabschnitt 20, so dass die beiden Teile 14, 16 gegeneinander gegen eine Verdrehung gesichert sind. Die umfasste Kontur des Anschlussteils 14 ist mit dem Bezugszeichen 44 bezeichnet. Hierbei besteht das Charakteristikum dieser Ausführung darin, dass die vom Aufnahmeteil umfasste Kontur 44 zusätzlich zu einer normgemäß vorhandenen Kontur 46 des Anschlussteils 14 vorhanden ist, die dem Angriff eines Werkzeugschlüssels dient. Durch diese Trennung der Konturen 44, 46 können bei der Montage bzw. Demontage vorteilhafterweise beschädigungsfrei sehr hohe Anzugsmomente des Schlüssels auf das Anschlussteil 14 übertragen werden.

Die Erfindung ist nicht auf die dargestellten Ausführungsbeispiele beschränkt, sondern umfasst auch Ausführungen, wie dies bereits durch die unterschiedlichen dargestellten konstruktiven Ausführungsformen der verschiedenen Bauteile deutlich wird. Was diese möglichen gleichwirkenden Ausführungen der Bauteile betrifft, wird insbesondere auf die eingangs genannten Dokumente EP 0 753 698 B1, EP 0 733 844 B1 und DE 203 19 959 U1 in vollem Umfang und im Speziellen auf obige entsprechende Ausführungen verwiesen.

So beschreibt beispielsweise die DE 203 19 959 U1 ein Merkmal, das auch bei den dargestellten Ausführungen der Erfindung vorgesehen ist, nämlich dass ein Verbindungsabschnitt 24 des Anschlussteils 14 als Schraubgewindestutzen ausgebildet sein kann, wobei ein zusätzlicher Dichtring 26, insbesondere als Axialdichtung, vorgesehen ist.

### Bezugszeichen

- 1: Steckverbinder
- 2: Gehäuseteil
- 4: Steckaufnahme von 2
- 6: Halteelement
- 8: Mediendichtung
- 10: Basisteil von 2
- 12: Stützhülse
- 14: Anschlussteil von 10
- 16: Aufnahmeteil von 10 für 8
- 18: Rastbereich von 16
- 20: Muffenabschnitt von 16
- 22: Einsatzteil von 2
- 22a: Innenkonus
- 24: Verbindungsabschnitt von 14
- 26: zusätzliche Dichtung
- 30: Schmutzdichtung
- 40: Kraft-Formschluss-Element
- 42: Innenwand von 16
- 44: von 16 umgriffene Kontur von 14
- 46: Kontur von 14 für Werkzeugangriff

- KST: Kunststoff
- Ms: Messing
- X-X: Längsachse von 1

## Patentansprüche

1. Steckverbinder (1) für insbesondere aus Kunststoff bestehende Rohrleitungen, bestehend aus einem Gehäuseteil (2) mit einer Steckaufnahme (4) zum mediendichten Einstecken eines rohrstückförmigen Einsteckteils, wobei in der Steckaufnahme (4) ein Halteelement (6) zum Arretieren sowie eine Mediendichtung (8) zum Abdichten des eingesteckten Einsteckteils angeordnet sind, und wobei das Gehäuseteil (2) ein Basisteil (10) aufweist, welches zweiteilig aus einem Aufnahmeteil (16) für das Halteelement (6) sowie aus einem Anschlussteil (14) zur Anschlussverbindung des Gehäuseteils (2), insbesondere an eine Gewindebohrung besteht, wobei die Mediendichtung (8) zum Abdichten des eingesteckten Einsteckteils radial zwischen dem Anschlussteil (14) und dem rohrstückförmigen Einsteckteil angeordnet ist, wobei das Gehäuseteil (2) aus dem Basisteil (10) und aus einem mit diesem verbundenen Einsatzteil (22) besteht.
**dadurch gekennzeichnet, dass** das Einsatzteil (22) formschlüssig im Inneren des Aufnahmeteils (16) gehalten ist, wobei das Aufnahmeteil (16) als ein das Anschlussteil (14) bereichsweise hülsenartig umgebendes Manschettenteil ausgebildet ist, und dass einerseits am Einsatzteil (22) über einen Innenkonus (22a) des Einsatzteiles (22) das Halteelement (6) radial abgestützt ist und andererseits in eine innere Ringnut des Einsatzteils (22) eine Schmutzdichtung (30) als Dichtring eingelegt ist.

2. Steckverbinder nach Anspruch 1,
**dadurch gekennzeichnet, dass** das Basisteil (10) und das Einsatzteil (22) über eine schnappbare Formschlussverbindung verbunden sind.

3. Steckverbinder nach Anspruch 1 oder 2,
**dadurch gekennzeichnet, dass** das Anschlussteil (14) aus Metall, vorzugsweise aus Messing (Ms), und das Aufnahmeteil (16) aus Kunststoff (KST) bestehen.

4. Steckverbinder nach einem der Ansprüche 1 bis 3,
**dadurch gekennzeichnet, dass** das Aufnahmeteil (16) durch Aufschrauben auf dem Anschlussteil (14) befestigt ist.

5. Steckverbinder nach einem der Ansprüche 1 bis 3,
**dadurch gekennzeichnet, dass** das Aufnahmeteil (16) mit dem Anschlussteil (14) verdrehfest verbunden, insbesondere verpresst, ist, wobei vorzugsweise das Aufnahmeteil (16) eine Außenkontur des Anschlussteils (14) formangepasst umfasst.

6. Steckverbinder nach Anspruch 5,
**dadurch gekennzeichnet, dass** die Außenkontur des Anschlussteils (14) polygonal oder gerändelt ausgebildet ist oder zwei Schlüsselflächen mit Untermaß aufweist.

7. Steckverbinder nach Anspruch 5,
**dadurch gekennzeichnet, dass** zur Erhöhung der Festigkeit der Verbindung zwischen dem Anschlussteil (14) des Basisteils (10) des Gehäuses (2) und dem Aufnahmeteil (16) auf dem Umfang des Anschlussteils (14) Kraft-Formschluss-Elemente (40) angeordnet sind, die sich in die Innenwand (42) des Aufnahmeteils (16) einprägen.

## Claims

1. A plug connector (1) for pipe conduits consisting in particular of plastics materials, comprising a housing part (2) with a plug-in receiving means (4) for the media-tight plugging-in of a plug-in part in the form of a pipe member, wherein a retaining element (6) for locking and a media-sealing means (8) for sealing off the plugged-in plug-in part are arranged in the plug-in receiving means (4), and wherein the housing part (2) has a base part (10) which comprises - in two parts - a receiving part (16) for the retaining element (6) and an attachment part (14) for the attachment of the housing part (2), in particular to a threaded bore, wherein the media-sealing means (8) for sealing off the plugged-in plug-in part is arranged radially between the attachment part (14) and the plug-in part in the form of a pipe member, wherein the housing part (2) comprises the base part (10) and an insert part (22) connected to the latter, **characterized in that** the insert part (22) is held in a positively locking manner in the interior of the receiving part (16), wherein the receiving part (16) is designed in the form of a collar part surrounding the attachment part (14) locally in the manner of a sleeve, and the retaining element (6) is supported radially on the insert part (22) by way of an internal cone (22a) of the insert part (22) on the one hand, and a dirt-sealing means (30) is inserted as a sealing ring into an internal annular groove in the insert part (22) on the other hand.

2. A plug connector according to Claim 1, **characterized in that** the base part (10) and the insert part (22) are connected by way of a snap-in closure with positive locking.

3. A plug connector according to Claim 1 or 2, **characterized in that** the attachment part (14) consists of metal, preferably of brass (Ms), and the receiving part (16) consists of plastics material (KST).

4. A plug connector according to any one of Claims 1 to 3, **characterized in that** the receiving part (16) is fastened to the attachment part (14) by being screwed on.

5. A plug connector according to any one of Claims 1 to 3, **characterized in that** the receiving part (16) is connected to the attachment part (14) in a rotationally fixed manner, in particular by press fitting, wherein the receiving part (16) preferably embraces an external contour of the attachment part (14) in a manner adapted to the shape thereof.

6. A plug connector according to Claim 5, **characterized in that** the external contour of the attachment part (14) is made polygonal or knurled or has two key surfaces with an undersize.

7. A plug connector according to Claim 5, **characterized in that**, in order to increase the strength of the join between the attachment part (14) of the base part (10) of the housing (2) and the receiving part (16), elements (40) with positive and non-positive locking, which are impressed into the inner wall (42) of the receiving part (16), are arranged on the periphery of the attachment part (14).

## Revendications

1. Raccord enfichable (1) destiné en particulier à des canalisations réalisées en matière plastique, comportant une partie formant boîtier (2) avec un logement d'enfichage (4) destiné à recevoir de manière étanche aux fluides une partie à enficher tubulaire, sachant que dans le logement d'enfichage (4) sont disposés un élément de fixation (6) destiné à immobiliser et une garniture d'étanchéité aux fluides (8) destinée à rendre étanche la partie à enficher enfichée, et sachant que la partie formant boîtier (2) comporte une partie de base (10), qui est réalisée en deux parties, à savoir une partie de réception (16) pour l'élément de fixation (6) et une partie de raccord (14) pour le raccordement de la partie formant boîtier (2), en particulier à une forure filetée, la garniture d'étanchéité aux fluides (8) destinée à rendre étanche la partie à enficher enfichée est disposée radialement entre la partie de raccord (14) et la partie à enficher tubulaire, la partie formant boîtier (2) étant formée par une partie de base (10) et un insert (22) relié à cette dernière,
**caractérisé en ce que** l'insert (22) est maintenu par conjugaison de forme à l'intérieur de la partie de réception (16), ladite partie de réception (16) étant réalisée sous la forme d'une manchette entourant à la manière d'une gaine des zones de la partie de raccord (14), et **en ce que**, d'une part, l'élément de fixation (6) est en appui radial sur l'insert (22) par l'intermédiaire d'un cône intérieur (22a) de l'insert (22), et, d'autre part, une garniture d'étanchéité aux saletés (30) sous la forme d'une bague d'étanchéité est insérée dans une rainure annulaire intérieure de l'insert (22).

2. Raccord enfichable selon la revendication 1, **caractérisé en ce que** la partie de base (10) et l'insert (22) sont reliés via un assemblage emboîté encliquetable.

3. Raccord enfichable selon la revendication 1 ou 2, **caractérisé en ce que** la partie de raccord (14) est réalisée en métal, de préférence en laiton (Ms), et la partie de réception (16) est réalisée en matière plastique (KST).

4. Raccord enfichable selon l'une quelconque des revendications 1 à 3, **caractérisé en ce que** la partie de réception (16) est fixée par vissage sur la partie de raccord (14).

5. Raccord enfichable selon l'une quelconque des revendications 1 à 3, **caractérisé en ce que** la partie de réception (16) est assemblée de manière immobile en rotation, en particulier par pressage, avec la partie de raccord (14), la partie de réception (16) étant ajustée, de préférence, à la forme d'un contour extérieur de la partie de raccord (14).

6. Raccord enfichable selon la revendication 5, **caractérisé en ce que** le contour extérieur de la partie de raccord (14) est polygonal ou moleté ou comporte deux surfaces pour une clé avec une dimension inférieure à la cote prescrite.

7. Raccord enfichable selon la revendication 5, **caractérisé en ce que** pour accroître la résistance de l'assemblage entre la partie de raccord (14) de la partie de base (10) du boîtier (2) et la partie de réception (16), des éléments d'assemblage par force et emboîtement (40) sont disposés sur la périphérie de la partie de raccord (14) et s'enfoncent dans la paroi intérieure (42) de la partie de réception (16).
